Europäisches Patentamt

European Patent Office

Office européen des brevets

(11) Publication number: **0 196 240 B1**

# EUROPEAN PATENT SPECIFICATION

(45) Date of publication of patent specification: **22.04.92**  (51) Int. Cl.⁵: **H02B 13/02**

(21) Application number: **86400323.1**

(22) Date of filing: **17.02.86**

(54) **Metal-clad gas-insulated switchgear apparatus.**

(30) Priority: **22.02.85 JP 24272/85 U**

(43) Date of publication of application:
**01.10.86 Bulletin 86/40**

(45) Publication of the grant of the patent:
**22.04.92 Bulletin 92/17**

(84) Designated Contracting States:
**AT BE CH DE FR GB IT LI NL SE**

(56) References cited:
**FR-A- 2 098 470**
**FR-A- 2 423 897**
**GB-A- 819 348**

(73) Proprietor: **MERLIN GERIN**
**Rue Henri Tarze**
**F-38050 Grenoble Cédex(FR)**

(72) Inventor: **Shimoda, Sumio NISSIN ELECTRIC
CO. LTD.**
**47, Umezu-Takase-cho Ukyo-ku**
**Kyoto(JP)**
Inventor: **Shimazaki, Toshio NISSIN ELECTRIC
CO. LTD.**
**47, Umezu-Takase-cho Ukyo-ku**
**Kyoto(JP)**

(74) Representative: **Kern, Paul et al**
**Merlin Gerin Sce. Brevets 20, rue Henri Tarze**
**F-38050 Grenoble Cédex(FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to an earthing switch system for a gas-insulated switchgear apparatus.

Gas-insulated metal-clad switchgear apparatus is generally provided with an earthing switch system to ground a conductor arranged inside a vessel thereby assuring safety of operators in maintenance and inspection of various parts thereof.

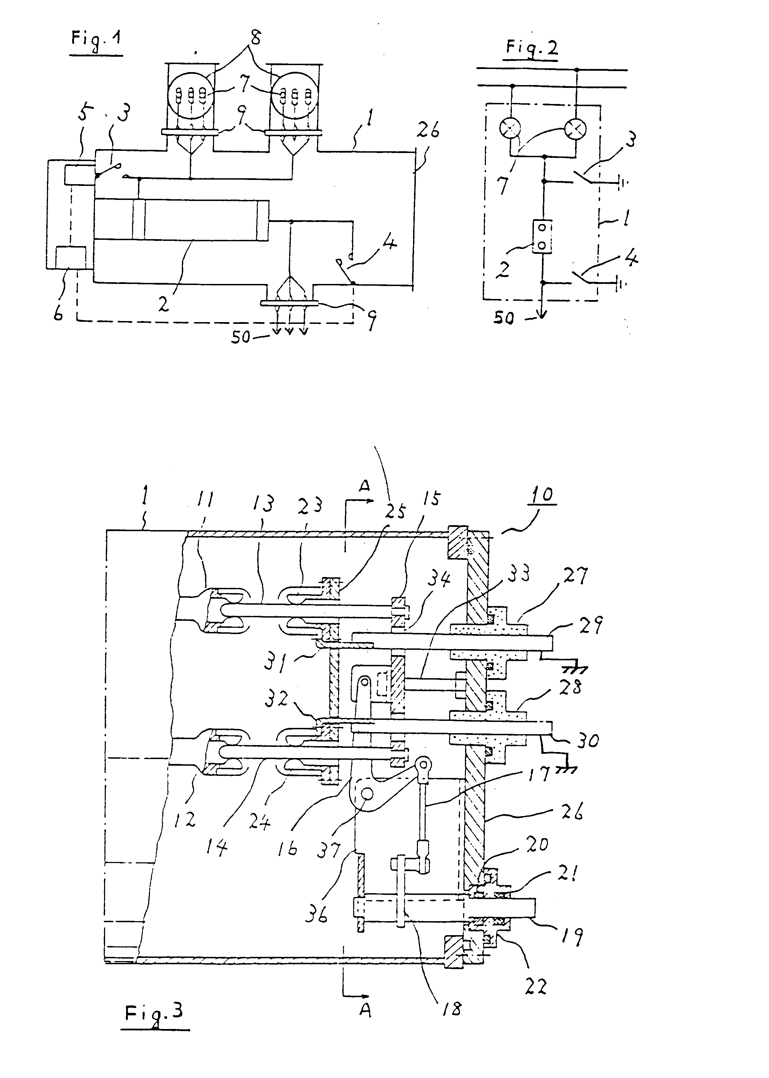

A conventional structure of an earthing switch system is illustrated in Fig. 1 and Fig. 2 which are respectively a schematic cross-section and a skeleton diagram of a three-phase gas-insulated switch using conventional earthing switches. Earthing switches 3 and 4 are provided on the opposite sides of a circuit breaker 2 in a vessel 1 filled with an insulating gas at a predetermined pressure, more particularly sulphur hexafluoride SF6. The earthing switches 3 and 4 are respectively operated by individual actuators 5 and 6 linked with each other. The reference numerals 7, 8 and 9 designate disconnecting switches, busbar pipes, and insulating spacers respectively. The output of the circuit breaker 2 is connected to cable heads 50. Since the two earthing switches 3 and 4 are provided separately from each other, it is necessary to provide separate attaching portions, and two operating mechanisms, which increase the structure of the vessel 1.

Moreover, since the two earthing switches 3 and 4 are operated separately from each other, it is necessary to provide two gas sealing bearings for airtightly leading the respective operating shafts of the earthing switches into the vessel 1. An auxiliary interlink mechanism or at least an interlock device is also necessary for the two actuators. The operation of this known metal-clad switchgear is complicated.

The document GB-A- 819.348 describes a flame-proof three-phase switchgear including a withdrawable circuit-breaker, and a fixed portion having socket contacts connected to feeder cables and bus-bars. An isolating device is inserted between the circuit-breaker head and the fixed portion, and comprises rectilinear movable disconnecting contacts having sliding engagement with stationary contacts connected to the terminals of the circuit-breaker, and are further provided with isolating plug contacts adapted to be introduced into the socket contacts by horizontal movement of a single carriage. The isolating plug contacts may be withdrawn from the socket contacts, so that the circuit-breaker is isolated. Earthing of the cable conductors occurs with a special earthing system by means of the enclosed circuit breaker.

An object of the present invention is to reduce the space of a metal-clad vessel including a pair of earthing switches on the opposite sides of a circuit breaker.

Another object of the present invention is to provide an improved compact earthing switch system having a common operating mechanism.

An earthing switch for a gas-insulated switchgear apparatus according to the present invention and defined in Cl 1 includes two earthing switches which are located side by side in a common vessel filled up with an insulating gas at a predetermined pressure, and which comprise two stationary contacts cooperating with two corresponding movable contacts attached to a driving plate causing to perform opening and closing operations at the same time by a common operating mechanism. Each pole of the earthing switch assembly includes a first and a second stationary contact cooperating respectively with a first and a second movable rectilinear contact extending in a longitudinal parallel direction between an open position and a closed position, said first stationary contact being electrically connected to one terminal of the circuit breaker, said second stationary contact being electrically connected to the opposite terminal of the circuit breaker. First and second movable contacts of the earthing switch assembly cooperate with corresponding sliding contacts which are mechanically fixed to a support plate of insulating material, and electrically connected by connecting conductors to a first set of stationary conductors and a second set of stationary conductors. A common driving plate made of insulating material is attached inside said vessel to said first and second movable contacts of the three poles, said plate being perpendicular to the longitudinal direction of said movable contacts. An operating mechanism includes a single operating shaft extending through a tight bearing of the vessel, and having an outer end which may be actuated from outside, and an inner end connected by a cinematic transmission lever to said driving plate so as to perform opening/closing operations of the two earthing switches at the same time.

The present invention will be apparent from the following detailed description taken in conjunction with the accompanying drawings, in which :
- Fig. 3 is a longitudinal sectional view of an earthing switch system according to the present invention;
- Fig. 4 is a transversal view in cross-section taken along line A-A of Fig. 3;
- Fig. 5 is a side view of Fig. 3;
- Fig. 6 is a diagram in cross-section showing the gas-insulated switch in which the earthing switch assembly is incorporated;

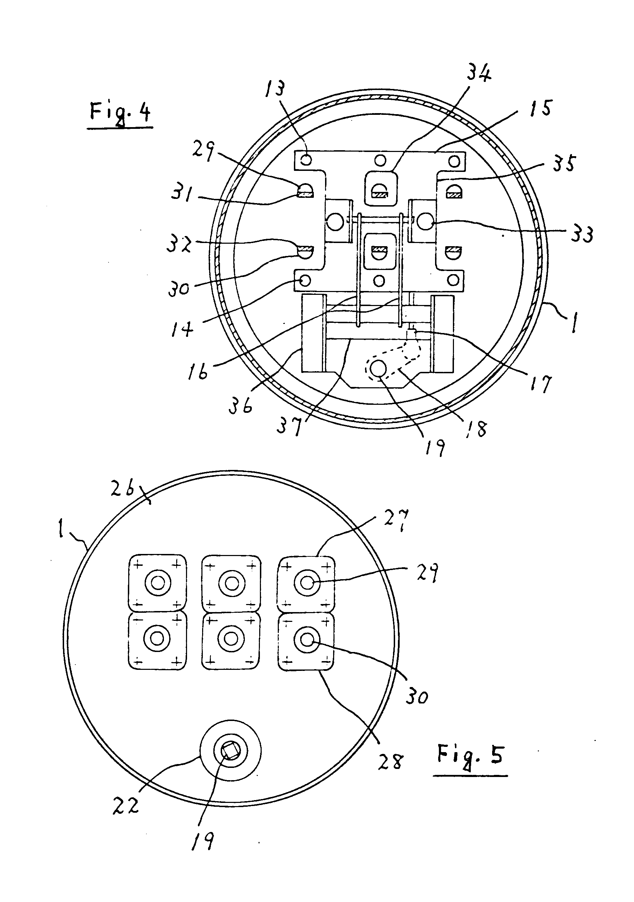

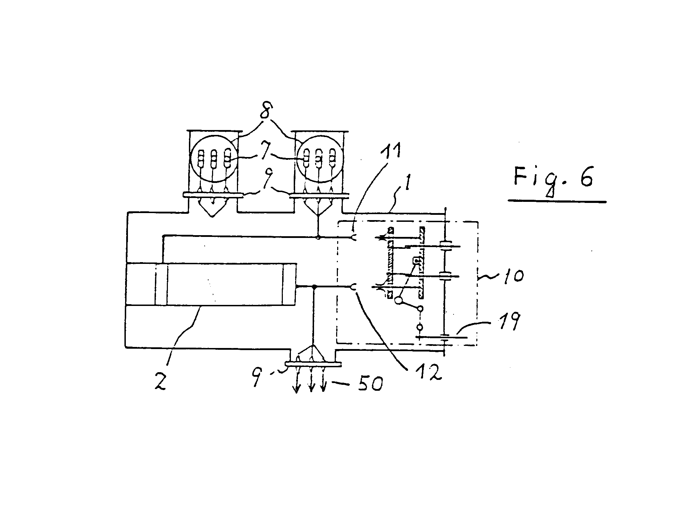

In Fig. 3 to 6 the earthing switch assembly 10 comprises two earthing switches having two sets of three-phase fixed contacts 11 and 12 and two sets of corresponding three-phase movable contacts 13 and 14 provided in a metallic vessel 1 filled with an insulating gas at a predetermined pressure, more particularly sulphur hexafluoride SF6. The movable contacts 13 and 14 are attached at their one end portions onto a common driving plate 15 made of an insulating material, and connected to an operating rotative shaft 19 through an operating lever 16, a link 17, and a transmission lever 18. The operating shaft 19 is driven by an externally provided common actuator (not shown) and led into the vessel through a bearing 22 having a seal structure provided with a step 20 and a sealing member 21. Sliding contacts 23 and 24 cooperate with the movable rectilinear contacts 13 and 14, and are fixed to a common attaching plate 25 made of an insulating material. The sliding contacts 23 and 24 are connected through connecting conductors 31 and 32 to a first set of stationary conductors 29 and a second set of stationary conductors 30, which are both connected to earth, and respectively extending through insulating bushings 27 and 28 attached onto a covering plate 26 of the vessel 1. The sliding contacts 23 and 24 which are fixed to the common attaching plate 25 are firmly held by the respective bushing conductors 29 and 30 and are electrically connected to the conductors 29 and 30 through the connecting conductors 31 and 32.

A guiding rod 33 fixed to the covering plate 26 extends inside the vessel 1 in a parallel direction to the conductors 29, 30 and cooperates with the driving plate 15 which is driven by the operating lever 16. A plurality of holes 34 and notch portions 35 are provided in the driving plate 15 for the passage of the conductors 29 and 30. A supporting bracket 36 is attached onto the covering plate 26 for supporting a shaft 37 of the operating lever 16 and an end portion of the operating rotative shaft 19.

The movable contacts 13 and 14 of the two earthing switches of the switch assembly 10 are driven (through the driving plate 15) by the single operating rotative shaft 19 so as to be put in their opened/closed states at the same time. There is only one tight bearing structure for the shaft 19. No interlink mechanism and no interlock are required for the operation of the two earthing switches.

## Claims

1. A metal-clad gas-insulated three phase switchgear apparatus comprising a metallic vessel (1) filled with an insulating gas at a predetermined pressure, more particularly sulphur hexafluoride SF6, said vessel (1) including a three pole circuit breaker (2) electrically connected between a busbar system (8) and a cable head structure (50), and a three pole earthing switch assembly (10) having a pair of earthing switches (3, 4) which may ground the opposite terminals of the circuit breaker upon maintenance or inspection of the switchgear, characterized in that :

- each pole of the singular earthing switch assembly (10) includes a first and a second stationary contact (11, 12) cooperating respectively with a first and a second movable rectilinear contact (13, 14) extending in a longitudinal parallel direction between an open position and a closed position, said first stationary contact (11) being electrically connected to one terminal of the circuit breaker (2), said second stationary contact (12) being electrically connected to the opposite terminal of the circuit breaker (2),

- a common driving plate (15) made of insulating material is attached inside said vessel (1) to said first and second movable contact (13, 14) of the three poles, said plate (15) being perpendicular to the longitudinal direction of said movable contacts (13, 14),

- an operating mechanism includes a single operating shaft (19) extending through a tight bearing of the vessel, and having an outer end which may be actuated from outside, and an inner end connected by a cinematic transmission lever (16, 17) to said driving plate (15) so as to perform opening/closing operations of the two earthing switches (29, 30) at the same time.

- said first and second movable contacts (13, 14) of the earthing switch assembly (10) cooperate with corresponding sliding contacts (23, 24) which are mechanically fixed to a support plate (25) of insulating material, and electrically connected by connecting conductors (31, 32) to a first set of stationary conductors (29) and a second set of stationary conductors (30),

- wherein said stationary conductors are connected to earth.

2. A metal-clad gas-insulated three-phase switchgear apparatus according to claim 1, characterized in that the first and second sets of stationary conductors (29, 30) extend in a parallel direction through insulating bushings (27, 28) arranged side by side in a covering plate (26) of said vessel (1).

3. A metal-clad gas-insulated three-phase switchgear apparatus according to claim 2, characterized in that a fixed guiding rod (33) is secured to said covering plate (26), and cooperates with said driving plate (15) upon rotation of the operating shaft (19).

4. A metal-clad gas-insulated three-phase switchgear apparatus according to claim 2 or 3, characterized in that a supporting bracket (36) is attached to the covering plate (26) for supporting a shaft (37) of the transmission pivoting lever (16), and the inner end portion of the operating rotative shaft (19).

## Revendications

1. Appareillage blindé triphasé à isolement gazeux comprenant un carter (1) métallique rempli de gaz isolant à une pression déterminée, notamment de l'hexafluorure de soufre SF6, ledit carter (1) renfermant un disjoncteur triphasé connecté électriquement entre un jeu de barres (8) et une boîte à câbles (50), et un sectionneur triphasé (10) de mise à la terre ayant une paire d'interrupteurs de terre (3, 4) susceptible d'assurer la mise à la terre des bornes opposées du disjoncteur lors de la maintenance ou de l'inspection de l'appareillage, caractérisé en ce que:

- chaque pôle du sectionneur (10) de mise à la terre comporte un premier et un deuxième contacts fixes (11, 12) coopérant respectivement avec un premier et un deuxième contacts mobiles (13, 14) linéaires s'étendant selon une direction parallèle longitudinale entre une position ouverte, et une position fermée, ledit premier contact fixe (11) étant relié électriquement a une borne du disjoncteur (2), ledit deuxième contact fixe (12) étant relié électriquement à la borne opposée du disjoncteur (2),

- une plaque (15) commune d'entraînement en matériau isolant est solidarisée à l'intérieur du carter (1) auxdits premier et deuxième contacts mobiles (13, 14) des trois pôles, ladite plaque (15) étant perpendiculaire à la direction longitudinale desdits contacts mobiles (13, 14),

- un mécanisme de commande comportant un arbre (19) de commande s'étendant à travers un palier étanche du carter (1), et ayant une extrémité externe entraînée depuis l'extérieur, et une extrémité interne connectée par un levier (16, 17) de transmission à ladite plaque (15) d'entraînement pour assurer simultanément les opérations d'ouverture/et de fermeture des deux interrupteurs de mise à la terre,

- lesdits premier et deuxième contacts mobiles (13, 14) du sectionneur (10) coopèrent avec des contacts coulissants (23, 24) correspondants, fixés mécaniquement à la plaque (15) isolante, et connectés électriquement par des contacts de liaison (31, 32) à une première série de conducteurs fixes (29), et à une deuxième série de conducteurs fixes (30),

- lesdits conducteurs fixes (29, 30) étant reliés à la terre.

2. Appareillage blindé triphasé à isolement gazeux selon la revendication 1, caractérisé en ce que la première et deuxième séries de conducteurs fixes (29, 30) s'étendent selon une direction parallèle à travers des traversées (27, 28) isolantes agencées côte-à-côte sur un couvercle (26) du carter (1).

3. Appareillage blindé triphasé à isolement gazeux selon la revendication 2, caractérisé en ce qu'une tige (33) fixe de guidage est fixée au couvercle (26), et coopère avec la plaque (15) d'entraînement lors de la rotation de l'arbre (19).

4. Appareillage blindé triphasé à isolement gazeux selon la revendication 2 ou 3, caractérisé en ce qu'un étrier support (36) est solidarisé au couvercle (26) pour supporter un axe (37) du levier pivotant (16) de transmission, et l'extrémité interne de l'arbre (19) rotatif de commande.

## Patentansprüche

1. Ein gasisoliertes, metallgekapseltes Dreiphasen-Schaltgerät, welches einen Metallbehälter (1) aufweist, der mit einem unter einem vorbestimmten Druck stehenden Isoliergas, insbesondere Schwefelhexafluorid SF6, gefüllt ist, wobei der genannte Behälter (1) einen elektrisch zwischen ein Sammelschienensystem (8) und Kabelanschlussvorrichtung (50) geschalteten, dreipoligen Leistungsschalter enthält, und eine dreipolige Erdungschaltanordnung (10) mit einem Paar Erdungsschalter (3, 4), die die gegenüberliegenden Klemmen des Leistungsschalters während der Wartung bzw. Inspektion der Schaltanlage erder können, dadurch gekennzeichnet, dass:

- jeder Pol der einzigen Erdungschaltanordnung (10) einen ersten und einen zweiten festen Kontakt (11, 12) aufweist, die mit einem ersten bzw. einem zweiten geradlinigen, beweglichen Kontakt (13, 14) zusammenarbeiten, die sich in einer parallelen Längsrichtung zwischen einer Oeffnungs- und einer Schliesstellung erstrecken, wobei der genannte feste Kontakt (11) elektrisch mit einer Klemme des Leistungsschalters (2) verbunden ist, und wobei der genannte feste Kontakt (12) elektrisch mit der gegenüberliegenden Klemme des Leistungsschalters (2) verbunden ist,

- eine gemeinsame Antriebsplatte (15) aus Isoliermaterial im Innern des genannten Behälters (1) am genannten ersten und zweiten beweglichen Kontakt (13, 14) der drei Pole befestigt ist, wobei die genannte Platte (15) senkrecht zur Längsrichtung der genannten beweglichen Kontakte (13, 14) steht,

- ein Antriebsmechanismus eine einzige Antriebswelle (19) aufweist, die sich durch ein dichtes Lager des Behälters erstreckt, und mit einem von aussen steuerbaren äusseren Ende, und mit einem inneren Ende, das durch einen kinematischen Übertragungshebel (16, 17) mit der genannten Antriebsplatte (15) verbunden ist, um Oeffnungs/Schliessvorgänge der zwei Erdungsschalter (29, 30) zur gleichen Zeit durchzuführen,

- der genannte erste und zweite bewegliche Kontakt (13, 14) der Erdungschaltanordnung (10) mit entsprechenden Gleitkontakten (23, 24) zusammenwirken, die mechanisch an einer Trägerplatte (25) aus Isoliermaterial befestigt sind und elektrisch durch Anschlussleiter (31, 32) mit einem ersten Satz von festen Leitern (29) und einem zweiten Satz von festen Leitern (30) verbunden sind,

- bei dem die genannten festen Leiter an Erde gelegt sind.

2. Ein gasisoliertes, metallgekapseltes Dreiphasen-Schaltgerät nach Anspruch 1, dadurch gekennzeichnet, dass sich der erste und der zweite Satz von festen Leitern (29, 30) in paralleler Richtung durch Isolierdurchführungen (27, 28) erstrecken, die Seite an Seite in einer Abdeckplatte (26) des genannten Behälters (1) angeordnet sind.

3. Ein gasisoliertes, metallgekapseltes Dreiphasen-Schaltgerät nach Anspruch 2, dadurch gekennzeichnet, dass ein befestigter Führungsstab (33) fest an der genannten Abdeckplatte (26) angebracht ist, und mit der genannten Antriebsplatte (15) bei der Drehung der Antriebswelle (19) zusammenarbeitet.

4. Ein gasisoliertes, metallgekapseltes Dreiphasen-Schaltgerät nach Anspruch 2 oder 3, dadurch gekennzeichnet, dass eine Trägerwand (36) an der Abdeckplatte (26) befestigt ist, um eine Welle (37) des schwenkbaren Uebertragungshebels (16) zu tragen, sowie die inneren Endabschnitte der drehbaren Antriebswelle (19).

Fig. 1

Fig. 2

Fig. 3

Fig. 4

Fig. 5

Fig. 6